# FASCICULE DE BREVET EUROPEEN

(11) **EP 1 636 049 B1**
(45) Date de publication et mention de la délivrance du brevet: **29.12.2010**
(21) Numéro de dépôt: 04767447.8
(22) Date de dépôt: 24.06.2004
(51) Int. Cl.: B44C 1/17, B41M 5/035, B65C 1/02

(54) **PROCEDE ET DISPOSITIF DE MARQUAGE PAR SUBLIMATION D'OBJETS ALLONGES**
SUBLIMATIONSDRUCKVERFAHREN UND -ANORDNUNG LÄNGLICHER GEGENSTÄNDE
METHOD AND DEVICE FOR MARKING LONG OBJECTS BY SUBLIMATION

(30) Priorité: 24.06.2003 FR 0307627; 29.10.2003 FR 0312632
(43) Date de publication de la demande: 22.03.2006
(73) Titulaire: Omerin SAS, 63600 Ambert (FR)
(72) Inventeur: Claveau, Bernard, 01100 Martignat (FR); Chalumeau, Jean-François, 39000 Lons le Saunier (FR)
(74) Mandataire: Maureau, Philippe
(86) Numéro de dépôt international: PCT/FR2004/001597
(87) Numéro de publication internationale: WO 2005/001786

(56) Documents cités:
- EP-A- 0 950 540
- WO-A-96/29208
- WO-A-98/08694

## Description

La présente invention concerne un procédé pour décorer des barres profilées en PVC, bois, aluminium et autres, par sublimation sur tous leurs contours et longueurs en même temps.

Traditionnellement cette décoration est effectuée à plat et mis sous pression pendant plusieurs minutes, sur une longueur très limitée. Cette décoration à plat ne peut pas sublimer tous les contours de l'objet profilé en même temps. Par exemple, pour un profilé de section carré doit être présenté quatre fois sous la presse pendant plusieurs minutes et les raccords ne sont jamais jointifs.

Le dispositif selon l'invention permet de réduire la durée de la décoration sur tout son pourtour et traite des pièces de dimensions infinies. Il comporte en effet, selon une première caractéristique, une matrice chauffante, vibratile, ou le noyau à une forme conique dans son entrée, pour finir à la forme du type de profilé que l'on a choisi de sublimer, sur des longueurs infinies. Le support d'encre sublimable, à la sortie du dispositif, est enlevé soit manuellement soit automatiquement.

Ce dispositif selon l'invention permet l'application de film décor et, dans ce cas, aucun déchet support n'est à retirer.

Le principe selon l'invention est de passer au centre de la matrice qui peut être fixe ou mobile selon l'adaptation du type de barre de profilé, par un effet de laminage qui permet de sublimer en continu.

Le principe selon l'invention est de faire en sorte que l'objet à marquer soit moteur. Le support de décor est entraîné car le coefficient de frottement support de décor sur la filière est inférieur au coefficient de frottement support de décor sur objet à décorer. Pour cela le choix du matériau de la filière tiendra compte du produit à décorer ainsi que son état de surface. Le choix tiendra compte aussi du besoin de température si l'on est en sublimation.

Les dessins annexés illustrent l'invention :

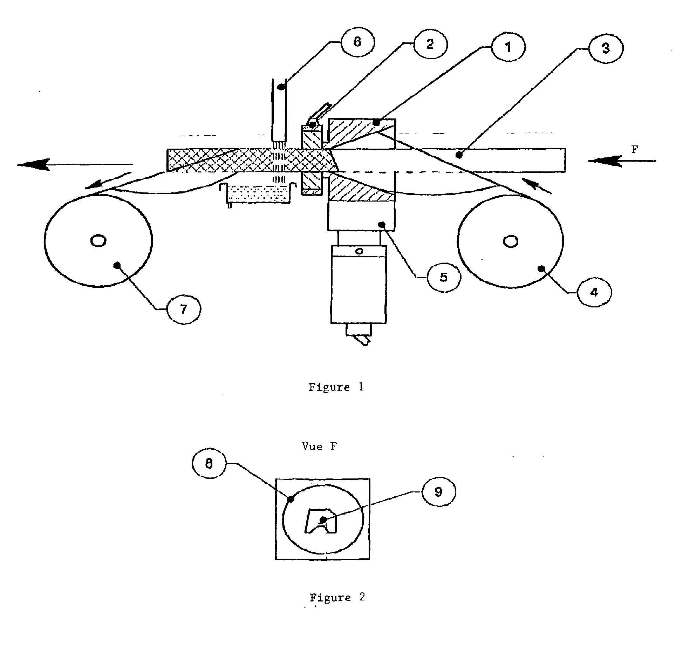

- la figure 1 représente en coupe l'action de la matrice au passage du film ou papier avec la barre ou profilé à sublimer ;
- la figure 2 représente l'entrée et sortie de la matrice.

En référence à ces dessins, le dispositif comporte une semelle vibrante (5) à haute fréquence pour supporter l'ensemble de la matrice (1).

La matrice (1) peut être en acier, élastomère ou résine.

La barre profilée (3) entre avec le film ou papier (4) en même temps, dans le noyau de la matrice (1) de mise en forme du papier ou film (4) pour traverser la filière (2) chauffante à une température de 180°C environ, dont l'effet du concept permet de sublimer en quelques secondes en continu, ou de coller le film ou papier sur la barre profilée (3) en décoration.

On peut sublimer câble électrique, tube, corde, tringle à rideaux en bois, P.V.C, métal, profilé pour fenêtre, parquet, etc.

L'invention concerne donc :
- un procédé de marquage par sublimation et pose de film ou papier décoré sur barres de profilés (3) à sections polygonales, sans limitation de longueur, par sublimation ou plaquage de décor au travers d'une matrice (1) et d'une filière (2) chauffante supportées par une semelle vibrante (5) ;
- un dispositif de mise en oeuvre dudit procédé dans lequel :
   - la forme intérieure de la filière (2) a la forme de l'objet à décorer (3).
   - la barre profilée (3) à décorer suivant sa nature de matériau peut ou non être refroidie en sortie de dispositif par arrosage (6) d'un liquide refroidissant tel que de l'eau.
   - un rembobinage (7) du déchet dans le cas de sublimation se fait en automatique ou non.
   - la semelle (5) porte matrice (1) et filière (2) est vibrante par des procédés tel que génération d'ultrasons ou vibration par électro-aimant.
   - la filière (2) peut être intégrée dans le cône (1) de mise en forme de support de décor (4).
   - la filière (2) peut remplacer le cône (1) avec un simple chanfrein à son entrée dans le cas de produit à marquer (3) ayant des formes simples.
   - les sections intermédiaires du cône (1) sont obtenus par le principe du morphing. La section d'entrée est un rond (8) la section de sortie (9) à la forme du produit à marquer (3).
   - le cône (1) peut faire office de filière (2) de par sa forme de sortie évitant ainsi le montage d'une filière (2).
   - dans le cas d'un produit à marquer (3) qui comporte de petites irrégularités de forme, des joints toriques peuvent être montés dans des gorges à l'intérieur de la filière (2) permettent de garder un bon contact du support de décor (4) sur le produit à marquer (3).

## Revendications

1. Procédé de marquage par sublimation et pose de film ou papier décoré sur barres de profilés (3) à sections polygonales, sans limitation de longueur, par sublimation ou plaquage de décor au travers d'une matrice (1) et d'une filière (2) chauffante supportées par une semelle vibrante (5).

2. Dispositif de mise en oeuvre du procédé selon la revendication 1, **caractérisé en ce que** la forme intérieure de la filière (2) à la forme de l'objet à décorer (3).

3. Dispositif selon la revendication 2, **caractérisé en ce que** la barre profilée (3) à décorer suivant sa nature de matériau doit ou non être refroidi en sortie de dispositif par arrosage (6) d'un liquide refroidissant telle que de l'eau.

4. Dispositif selon les revendications 2 et 3, **caractérisé en ce qu'**un rembobinage (7) du déchet dans le cas de sublimation se fait en automatique ou non.

5. Dispositif selon la revendication 2, **caractérisé en ce que** la semelle (5) porte matrice (1) et filière (2) est vibrante par des procédés tel que génération d'ultrasons ou vibration par électro-aimant.

6. Dispositif selon la revendication 2, **caractérisé en ce que** la filière (2) peut être intégrée dans le cône (1) de mise en forme de support de décor (4).

7. Dispositif selon la revendication 2, **caractérisé en ce que** la filière (2) peut remplacer le cône (1) avec un simple chanfrein à son entrée dans le cas de produit à marquer (3) ayant des formes simples.

8. Dispositif selon la revendication 2, **caractérisé en ce que** les sections intermédiaires du cône (1) sont obtenus par le principe du morphing. La section d'entrée est un rond (8) la section de sortie (9) à la forme du produit à marquer (3).

9. Dispositif selon la revendication 2, **caractérisé en ce que** le cône (1) peut faire office de filière (2) de par sa forme de sortie évitant ainsi le montage d'une filière (2).

10. Dispositif selon la revendication 2, **caractérisé en ce que** dans le cas d'un produit à marquer (3) qui comporte de petites irrégularités de forme, des joints toriques peuvent être montés dans des gorges à l'intérieur de la filière (2) permettent de garder un bon contact du support de décor (4) sur le produit à marquer (3).

## Claims

1. A method for marking by sublimation and laying decorated film or paper on profile bars (3) with polygonal sections, without any length limitation, by decoration sublimation or plating through a matrix (1) and a heating die (2) supported by a vibrating sole (5).

2. A device for applying the method according to claim 1, **characterized in that** the inner shape of the die (2) has the shape of the object to be decorated (3).

3. The device according to claim 2, **characterized in that** the profiled bar (3) to be decorated according to the nature of its material should either be cooled or not at the outlet of the device by spraying (6) with cooling liquid such as water.

4. The device according to claims 2 and 3, **characterized in that** rewinding (7) of the waste in the case of sublimation is either accomplished automatically or not.

5. The device according to claim 2, **characterized in that** the sole (5) bearing the matrix (1) and the die (2) is vibrating by methods such as generation of ultrasonic waves or vibration by an electromagnet.

6. The device according to claim 2, **characterized in that** the die (2) may be integrated into the cone (1) for shaping the decoration support (4).

7. The device according to claim 2, **characterized in that** the die (2) may replace the cone (1) with a simple champfer at its inlet in the case of a product to be marked (3) having simple shapes.

8. The device according to claim 2, **characterized in that** the intermediate sections of the cone (1) are obtained by the morphing principle; the inlet section is a circle (8), the outlet section (9) has the shape of the product to be marked (3).

9. The device according to claim 2, **characterized in that** the cone (1) may act as a die (2) because of its outlet shape thereby avoiding the mounting of a die (2).

10. The device according to claim 2, **characterized in that** in the case of a product to be marked (3) which includes small shape irregularities, O-ring gaskets may be mounted in grooves inside the die (2) with which good contact of the decoration support (4) on the product to be marked (3) may be retained.

## Patentansprüche

1. Markierungsverfahren durch Sublimieren und Aufbringen von Folie oder Dekorpapier auf Profilstäben (3) mit polygonalen Querschnitten ohne Längenbegrenzung durch Sublimieren oder Plattieren von Dekor anhand einer Matrize (1) und einer Heizdüse (2), die von einer Vibrationssohle (5) getragen werden.

2. Vorrichtung zur Umsetzung des Verfahrens nach Anspruch 1, **dadurch gekennzeichnet, dass** die innere Form der Düse (2) die Form des zu dekorierenden Gegenstands (3) hat.

3. Vorrichtung nach Anspruch 2, **dadurch gekennzeichnet, dass** der zu dekorierende Profilstab (3) gemäß seiner Werkstoffart beim Verlassen der Vorrichtung durch Beregnen (6) mit einer Kühlflüssigkeit wie Wasser gekühlt werden muss oder nicht.

4. Vorrichtung nach den Ansprüchen 2 und 3, **dadurch gekennzeichnet, dass** das Aufrollen (7) des Abfall beim Sublimieren automatisch erfolgt oder nicht.

5. Vorrichtung nach Anspruch 2, **dadurch gekennzeichnet, dass** die Sohle (5), die die Matrize (1) und die Düse (2) trägt, durch Verfahren wie Erzeugen von Ultraschall oder Vibration durch Elektromagnet vibriert.

6. Vorrichtung nach Anspruch 2, **dadurch gekennzeichnet, dass** die Düse (2) in den formgebenden Konus (1) des Dekorträgers (4) integriert sein kann.

7. Vorrichtung nach Anspruch 2, **dadurch gekennzeichnet, dass** die Düse (2) den Konus (1) bei einem zu markierenden Produkt (3), das einfache Formen hat, durch eine einfache Fase an ihrem Eingang ersetzen kann.

8. Vorrichtung nach Anspruch 2, **dadurch gekennzeichnet, dass** die Zwischenquerschnitte des Konus (1) durch das Prinzip des Morphings hergestellt werden. Der Eingangsquerschnitt ist ein Kreis (8), der Ausgangsquerschnitt (9) entspricht der Form des zu markierenden Produkts (3).

9. Vorrichtung nach Anspruch 2, **dadurch gekennzeichnet, dass** der Konus (1) aufgrund seiner Ausgangsform als Düse (2) dienen kann, wobei **dadurch** die Montage einer Düse (2) vermieden wird.

10. Vorrichtung nach Anspruch 2, **dadurch gekennzeichnet, dass**, wenn das zu markierende Produkt (3) ungleichmäßig geformt ist, R-Ringe in den Rillen in der Düse (2) montierbar sind, die es erlauben, einen guten Kontakt des Dekorträgers (4) auf dem zu markierenden Produkt (3) aufrechtzuerhalten.
